# NEUE EUROPÄISCHE PATENTSCHRIFT

(11) **EP 0 628 387 B2**
(45) Veröffentlichungstag und Bekanntmachung des Hinweises auf die Entscheidung über den Einspruch: **12.01.2005**
(45) Hinweis auf die Patenterteilung: 29.07.1998
(21) Anmeldenummer: 94107580.6
(22) Anmeldetag: 17.05.1994
(51) Int. Cl.: B26F 3/02

(54) **Verwendung von Zackenschnittmessern zum Längsschneiden von Selbstklebebändern**
Use of zig-zag blades for the longitudinal cutting of adhesive tapes
Application de lames en zig-zag pour la coupe de bandes adhésives

(30) Priorität: 03.06.1993 DE 4318277
(43) Veröffentlichungstag der Anmeldung: 14.12.1994
(73) Patentinhaber: tesa AG, 20253 Hamburg (DE)
(72) Erfinder: Jakobi, Wolfgang, Dr., D-77743 Neuried (DE); Besler, Benno, D-77656 Offeburg (DE); Kluge-Paletta, D-21244 Buchholz (DE); Friedrich, Susann, D-77654 Offenburg (DE); Jauchen, Peter, D-22455 Hamburg (DE); Szonn, Bodo, D-24629 Kisdorf (DE)

(56) Entgegenhaltungen:
- FR-A- 1 514 712
- GB-A- 856 192
- GB-A- 1 188 344
- GB-A- 2 191 969
- JP-A- 559 334
- US-A- 4 851 064

## Beschreibung

Die Erfindung betrifft die Herstellung einer Rolle eines doppelseitig klebenden Teppich-Fixes mit einem biaxial gerechten PP-Träger, nach dem Oberbegriff des Patentanspruches 1.

Das Problem der Kanteneinreißbarkeit bei Selbstklebebändern stellt sich seit langem. Denn Klebebänder mit Trägern aus Kunststoff-Folien lassen sich meist schlecht von Hand abreißen, ein Messer oder eine Schere muß zu Hilfe genommen werden, notfalls auch die Zähne.

Wegen dieser für die Praxis so wichtigen Anforderung ist dieses Problem von verschiedenen Seiten angegangen worden. So wurden spezielle Trägerfolien entwickelt, etwa geschäumt und/oder gereckt, die papierähnliche Eigenschaften haben sollten hinsichtlich ihrer Kanteneinreißbarkeit, vgl. u.a. DE-OS 3.323.018. Für die hohen Anforderungen der Praxis aber haben sich solche Klebebänder als unzureichend gezeigt und nicht durchsetzen können. Auch Produkte mit einem speziell für Kanteneinreißbarkeit entwickelten Verstärkungs-Gewebe auf der Trägerfolie, wie sie in der US-PS 4.439.482 beschrieben sind, zählen dazu.

Es ist auch schon vorgeschlagen worden, den Folienträger eines solchen Klebebandes zu perforieren, vgl. US-PS 4.581.087, etwa mittels Prägewalzen, um eine Kanteneinreißbarkeit von Hand zu erzielen. Auch Klebebänder mit PP-Träger sollten diese Eigenschaft bekommen, indem besondere Reckverhältnisse und Gehalte an isotaktischem PP vorgegeben wurden, vgl. DE-OS 2.440.286, ohne daß dies sich hätte in der Praxis durchsetzen können.

Schließlich wurde auch die Kante von Selbstkiebebändern bereits bearbeitet, etwa mit Schnittmessern, aus denen im Schnittbereich Teile herausgebrochen wurden, (gerändelt), um so einen gewollt ungleichmäßigen Schnitt zu erzielen. Bei schwierig zu reißenden Klebebändern mit zäheleastischen PP-Trägern, bei denen zudem durch eine Klebmasse hindurch geschnitten werden muß, versagt aber auch ein solches Schneidverfahren.

Aus US 4,851,064 sind zudem handeinreißbare einseitig klebende Selbstklebebänder und ihre Herstellung bekannt, wobei die dort beschriebene Erfindung im seitlichen Anritzen einer Klebebandrolle besteht, etwa gemäß Figur 10 und 11, sowie im Bearbeiten der Rollenseke mit Sandpapier, etwa gemäß Fig. 6 und 7. Als Alternative wird gemäß Fig. 5 zwar auch die Verwendung von Zackenschnittmessern erwähnt (Sp. 3, Z. 12-18) als eine von mehreren Möglichkeiten zur Verbesserung der Kanteneinreißbarkeit, jedoch ist darin keine Anregung enthalten, gerade dieses Schneidverfahren zur Herstellung eines Teppich-Fixes anzuwenden, zumal ein Teppich-Fix sich u.a. hinsichtlich der Dicke der Klebschichten, die auch noch beidseits aufgebracht sind, wie auch eines kräftigen Trennpapiers zwischen den einzelnen Klebeband-Lagen unterscheidet, so daß nicht jedes der vorbekannten Herstellungsverfahren zu den für ein Teppich-Fix gewünschten Eigenschaften führt, insbesondere auch zu einer gewünschten Verringerung der Kantenklebrigkeit.

Aufgabe er Erfindung war es, hier Abhilfe zu schaffen, insbesondere einen Weg aufzuzeigen, wie man doppelseitig klebende Teppich-Fixe mit einem biaxialgerechten PP-Träger für die hohen Anforderungen der Praxis so gestalten kann, daß eine Kanteneinreißbarkeit gegeben ist, daß also ein solches Klebeband von Hand quer abgerissen werden kann, ohne eine Schere oder ein Messer benutzen zu müssen.

Erfindungsgemäß gelöst wird diese Aufgabe durch die Herstellung, wie sie im Anspruch 1 näher gekennzeichnet ist.

Zackenschnittmesser sind als solche bekannt. Sie werden bei der industriellen Fertigung z.B. von Pflastern und ähnlichen Medikal-Produkten eingesetzt, um ein Ausfransen von Gewebeträgern zu verhindern, oder etwa dort, wo aus optischen Gründen ein Produkt mit einer gezackten Kante erwünscht ist. Solche Zackenschnittmesser sind demgemäß auch im Handel erhältlich. Auch für das Quer-Abschneiden von Klebebändern sind Zackenschnittmesser üblich, etwa integriert in Abroller, ohne daß dies etwas zur Ableitung der vorliegenden Erfindung ergäbe.

Daß man aber beim Einsatz solcher Zackenschnittmesser bei Teppich-Fixe mit einem biaxialgerechten PP-Träger eine problemlose Kanteneinreißbarkeit erzielen kann, war bei dem Jahrzehnte bestehenden Problem für den Klebeband-Fachmann in der Tat überraschend. Daß man damit also eine Kanteneinreißbarkeit bei sogar mit Trennpapier eingedeckten Fix-Produkten erzielen kann, hätte kein Fachmann zu hoffen gewagt. Dabei ergibt sich eine glatte Rißkante, über das gesamte Produkt, sowohl im PP-Träger als auch im Trennpapier, ohne daß dabei bedeutende Kräfte zum Abreißen nötig wären.

Als angenehmer Nebeneffekt stellte sich heraus, daß die Kantentklebrigkeit der erfindungsgemäß geschnittenen Rollen deutlich reduziert ist, was durch die geringere Berührungsfläche der Rollen untereinander in einem Rollenstapel hervorgerufen wird. Gegebenenfalls sind dadurch die sonst nötigen Zwischenlegscheiben überflüssig.

Die eingesetzten Zackenschnittmesser haben eine Zackenhöhe von etwa 0,3 - 6 mm, insbesondere 0,4 - 1,0 mm, ganz besonders 0,5 mm. Dabei wird der Spitzenwinkel einer Zacke bevorzugt so gewählt, daß die Einreißkräfte der fertigen Rolle im gewünschten Bereich liegen. Je stumpfer der Winkel, desto schwerer wird die Kanteneinreißbarkeit, um bei 180° den Wert des glatt geschnittenen Materials zu erreichen. Als besonders günstig hat sich ein Spitzenwinkel von 90° erwiesen.

Im folgenden soll die Erfindung beispielhaft erläutert werden, ohne diese damit unnötig einschränken zu wollen.

### Beispiel

Eine Jumbo-Rolle von 1000 m Länge und 1050 mm Breite, aufgebaut auf einem 50 µm biaxial gerecktem PP-Träger, beidseitig beschichtet mit 100 g/m² mit Kautschuk-Selbstklebemasse und mit einem silikonisierten Trennpapier einseitig eingedeckt, wird zu verkaufsfähigen Rollen aufgeschnitten. Die Längsschnitte werden mit Quetschmessern gegen eine Stahlwalze angebracht. Die Quetschmesser sind besonders geschliffen, um einen Zackenschnitt zu erhalten. Messer dieser Art sind von der Firma Alcon Tools, Ohio, USA, erhältlich. Die Zackenhöhe der Messer beträgt 0,5 mm, der Spitzenwinkel einer Zacke beträgt 90°. Die weiteren Schneidparameter sind gegenüber dem Standardverfahren unverändert: Schneidgeschwindigkeit 100 m/min, Wickelspannung bleibt gleich, ohne daß es dabei zu zusätzlichen Maschinenstops durch unbeabsichtigte Abrisse kommt.
Durch den Einsatz dieses makroskopischen Zackenschnittmessers wird so eine Kanteneinreißbarkeit erreicht, obwohl die PP-Folie durch eine Klebemasse und ein Trennpapier gegen einen Stahlzylinder geschnitten wird.

Das so erhaltene Teppich-Fix läßt sich problemlos und mit geringem Kraftaufwand glatt von Hand quer abreißen.

## Patentansprüche

1. Herstellung einer Rolle eines doppelseitig klebenden Teppich-Fixes mit einem biaxial gerechten PP-Träger, wobei das Teppich-Fix einseitig mit einem Trennpapier vor dem Aufwickeln zur Rolle eingedeckt ist, **dadurch gekennzeichnet, dass** vor dem Aufwickeln zur Rolle unter Verwendung von Zackenschnittmessern das eingedeckte Teppich-Fix in seiner Längsrichtung sowohl durch das Teppich-Fix als auch durch das Trennpapier geschnitten wird, zwecks Kanteneinreissbarkeit und Verringerung der Kantenklebrigkeit der Rolle, wobei die Zacken des Zackenschnittmessers eine Zackenhöhe von 0,3 bis 6 mm, insbesondere 0,4 bis 1 mm, ganz besonders 0,5 mm aufweisen.

## Claims

1. Production of a roll of double-face adhesive carpet fixing tape with biaxially stretched PP backing, the carpet fixing tape being covered on one side with a release paper before being wound to form a roll, **characterized in that**, before being wound to form the roll, the covered carpet fixing tape is cut, using macroscopic jagged cutters, in its longitudinal direction through both the carpet fixing tape and the release paper, for edge tearability and reduction in the stickiness of the edge of the roll, the jags of the jagged cutter having a jag height of 0.3-6 mm, in particular 0.4-1 mm, very particularly 0.5 mm.

## Revendications

1. Fabrication d'un rouleau d'un fixateur de tapis adhésif double face avec un support en PP à étirage biaxial, le fixateur de tapis étant recouvert sur une face avec un papier de séparation avant le bobinage en rouleau, **caractérisée en ce que** le fixateur de tapis recouvert est, avant son bobinage en rouleau, coupé dans sa direction longitudinale en utilisant des lames en zigzag macroscopiques, aussi bien à travers le fixateur de tapis qu'à travers le papier de séparation, en vue de l'aptitude à la déchirure des bords et de la diminution de l'adhérence des bords du rouleau, les dents de la lame en zigzag présentant une hauteur de dent de 0,3 - 6 mm, en particulier de 0,4 - 1 mm, tout particulièrement de 0,5 mm.
